(19) Europäisches Patentamt

European Patent Office

Office européen des brevets

(11) Veröffentlichungsnummer: **0 511 413 A1**

# (12) EUROPÄISCHE PATENTANMELDUNG

(21) Anmeldenummer: **91106900.3**

(51) Int. Cl.⁵: **B65D 81/20**

(22) Anmeldetag: **27.04.91**

(43) Veröffentlichungstag der Anmeldung:
**04.11.92 Patentblatt 92/45**

(84) Benannte Vertragsstaaten:
**AT BE CH DE DK ES FR GB IT LI NL SE**

(71) Anmelder: **VIATECH, INC.**
**One Aerial Way**
**Syosset, NY 11791(US)**

(72) Erfinder: **Fisher, Arthur**
**Forellenweg 6**
**W-8970 Immenstadt(DE)**
Erfinder: **Mesrobian, Robert, Dr.**
**188 Long Lots Road**
**Westport, CT 06880(US)**
Erfinder: **Pelletier, Ives**
**Ferembal S.A., Rue Fresnel**
**Ludres(FR)**

(74) Vertreter: **Pfister, Helmut, Dipl.-Ing.**
**Buxacher Strasse 9**
**W-8940 Memmingen/Bayern(DE)**

(54) Verfahren zur Herstellung eines Doppelbehältnisses.

㊼ Das Doppelbehältnis besteht aus einem Innenbeutel (2) und einer äußeren Hülle (1). Der Innenbeutel enthält beispielweise Gemüse (3), das nach dem Verschluß des Innenbeutels sterilisiert wird. Beim Sterilisierungsvorgang geht die Sauerstoffsperre des Innenbeutels teilweise verloren. Der Innenbeutel wird daher nach dem Sterilisieren in den Außenbeutel eingelegt, der Stickstoff enthält und dicht verschlossen wird.

EP 0 511 413 A1

Die Erfindung betrifft ein Verfahren zur Herstellung eines Doppelbehältnisses für die Verpackung von sterilisierten Nahrungsmitteln, mit einem Außen- und einem Innenbehältnis aus Kunststoff-Verbunden, sowie ein Doppelbehältnis nach diesem Verfahren.

Vorbereitete Gemüse wie Erbsen, Bohnen und Mais werden im allgemeinen im Autoklaven zwischen 115 Grad Celsius und 135 Grad Celsius sterilisiert, nachdem sie unter Vakuum in flexiblen Kunststoffverbundfolien verpackt wurden. Während dieses Vorganges kommt es zu einer Verschlechterung der Sperreigenschaften der Folie gegenüber Sauerstoff und damit zu nachteiligen oxydativen Veränderungen des abgepackten Nahrungsmittels. Das beeinträchtigt das Aussehen des Produktes ebenso wie die Qualität.

Die Erfindung hat es sich deshalb zur Aufgabe gemacht, ein Verfahren zur Herstellung einer Verpackung für sterilisierte Nahrungsmittel vorzusehen, bei der das Eindringen von Sauerstoff unterbunden wird.

Dazu geht die Erfindung aus von einem Verfahren der oben beschriebenen Art und schlägt vor, daß nach dem Sterilisierungsvorgang in die äußere Hülle Schutzgas eingeleitet wird und die Hülle dann versiegelt wird. Dazu werden der oder die Innenbeutel nach dem Autoklavenprozeß in der äußeren Hülle plaziert und dann begast. Dadurch wird auf einfache und kostengünstige Weise sichergestellt, daß kein Sauerstoff zu dem in die innere Hülle abgepackten Lebensmittel vordringen kann. Wird das Behältnis geöffnet, beispielsweise zum Vertrieb und zur Auslage in Supermärkten, so verflüchtigt sich das Schutzgas.

Es hat sich als günstig herausgestellt, wenn als Schutzgas Stickstoff verwendet wird. Stickstoff ist für das Nahrungsmittel unschädlich, kostengünstig und leicht zu handhaben. Es können auch andere Schutzgase zum Einsatz kommen.

Die Erfindung betrifft weiter ein Doppelbehältnis, hergestellt nach dem oben beschriebenen Verfahren, wobei der Innenbeutel vorzugsweise Gemüse aufnimmt. Bei dem Gemüse handelt es sich um Erbsen, Bohnen, Mais, Karotten oder Spinat oder auch Kombinationen aus den oben genannten Gemüsesorten. Es können auch andere Nahrungsmittel im Innenbeutel verpackt werden.

Bei einer bevorzugten Ausführungsform der Erfindung weist der Innenbeutel eine feuchtigkeitsempfindliche Barriereschicht auf. Die Barriereschicht besteht beispielsweise Äthylenvinylalkohol oder Polyvinylalkohol.

Es ist bekannt, daß Polyvinylalkohol und Äthylenvinylalkohol hervorragende Barriereeigenschaften in Kombination mit mehrlagigen Polymer-Strukturen aufweisen, beispielsweise als Siegelrandbeutel, Beutel und tiefgezogene Behälter, Dosen oder Flaschen, insbesondere wenn sie für die Verpackung von sauerstoffempfindlichen Nahrungsmitteln eingesetzt werden. Auch ist bekannt, daß die Feuchtigkeitsempfindlichkeit der oben genannten Barrierekomponenten, meist als Äthylenvinylalkohol bekannt, eine beträchtliche Verminderung der Barriereeigenschaften gegenüber Sauerstoff bewirken kann (europäische Patentanmeldung 0 059 274 von American Can Co.). Die Feuchtigkeit kann eine Barriereschicht auf verschiedene Art erreichen, beispielsweise wenn das verpackte Produkt in einer Umgebung hoher relativer Feuchtigkeit gelagert wird, wenn das Produkt feucht ist oder wenn Wasserdampf während der Sterilisation, wie sie im Autoklaven stattfindet, in die Barrierekomponente einwandert. Diese Feuchtigkeitsempfindlichkeit ist kurz nach der Behandlung im Autoklaven sehr hoch, und die Sperreigenschaften gegenüber Sauerstoff werden erst nach einiger Zeit wieder erreicht. Das Einleiten von Stickstoff dient dazu, der Äthylenvinylalkohol- bzw. Polyvinylalkohol-Barriereschicht der ersten inneren Verpackung die Zeit zur Verfügung zu stellen, diese Sperreigenschaft wieder zu gewinnen.

Andererseits ist es manchmal wünschenswert, daß Sauerstoff in die Verpackung eintritt. So kann beispielsweise der Sauerstoff das Aussehen des Produktes für kurze Zeit optisch positiv beeinflussen, so daß sich ein günstiger Verkaufseffekt ergibt.

Wird also die äußere Hülle des Doppelbehältnisses geöffnet und dringt nach dem Entweichen des Schutzgases Sauerstoff in die Innenbeutel ein, so kann dieser Effekt für die Auslage in Supermärkten oder dergleichen verwendet werden.

Es ist wünschenswert, wenn die äußere Hülle, die aus Bodenteil und Seitenteilen besteht, aus einem Verbund von Polyäthylen und Hart-PVC oder amorpher Polyesterfolie hergestellt ist. Dabei wird die PVC- oder Polyesterfolie mit der Polyäthylenschicht kaschiert. Eine solche Verpackung ist relativ kostengünstig, läßt sich einfach herstellen und ist zumindest teilweise standfest. Dadurch wird Transport und Lagerung vereinfacht. Auch eignet sich eine solche äußere Hülle für den Vertrieb und die Auslage in Supermärkten.

In der Zeichnung wird ein erfindungsgemäßes Ausführungsbeispiel schematisch beschrieben. Es zeigen:

Fig. 1     eine Schnittdarstellung durch ein Doppelbehältnis gemäß der Erfindung,

Fig. 2     eine graphische Darstellung der eindringenden Menge Sauerstoff gegen die Zeit gemäß der Erfindung,

Fig. 3     eine Schnittdarstellung durch einen Folienverbund für einen Innenbeutel gemäß der Erfindung,

Fig. 4     eine graphische Darstellung der eindringenden Sauerstoffmenge gegen die Zeit gemäß der Erfindung,

Fig. 5    eine schematische Schnittdarstellung eines weiteren Ausführungsbeispiels eines Folienverbundes für den Innenbeutel gemäß der Erfindung,

Fig. 6    einen schematischen Querschnitt einer Deckelfolie gemäß der Erfindung,

Fig. 7    einen schematischen Querschnitt einer seitlichen Wand und eines Bodens einer Außenverpackung gemäß der Erfindung, und

Fig. 8    eine Deckelfolie für eine Außenverpackung gemäß der Erfindung.

Das Doppelbehältnis besteht im wesentlichen aus der äußeren Hülle 1 mit Bodenteil 5 und Seitenteilen 6 sowie einer aufsiegelbaren Deckelfolie 7 und dem Innenbeutel 2. Der Innenbeutel 2 enthält das Nahrungsmittel 3, beispielsweise Gemüse, und ist aus einem Folienverbund hergestellt.

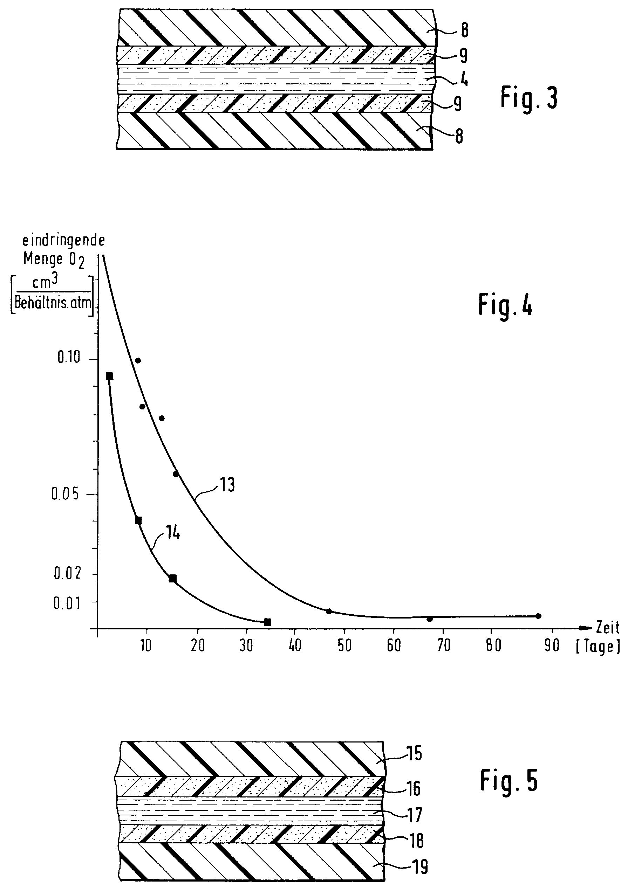

Wie in Fig. 3 zu sehen ist, besteht der Folienverbund beispielsweise aus fünf Schichten, wobei die mittlere Schicht eine Barriereschicht 4 aus Äthylenvinylalkohol ist. Es kann auch Polyvinylalkohol als Barriereschicht eingesetzt werden.

Die Barriereschicht 4 ist beidseitig mit einer Polypropylenschicht 8 kaschiert, wobei ein Haftvermittler 9 verwendet wird.

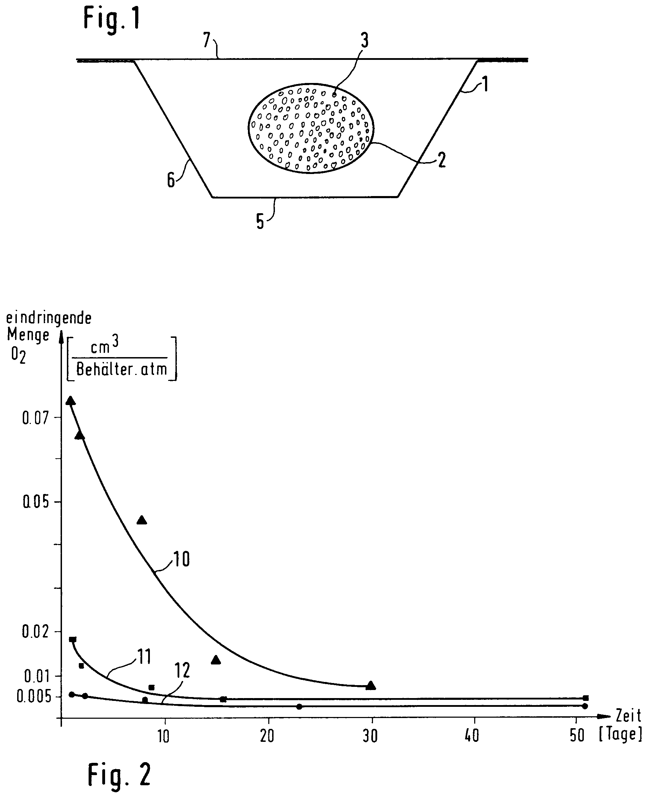

In den Fig. 2, 3 und 4 wurden die folgenden Materialien verwendet:

Durchmesser 83 x 44 mm Dose - Äthylenvinylalkohol: 5 Gewichtsprozent

Durchmesser 85 x 44 mm Dose - Äthylenvinylalkohol: 10 Gewichtsprozent

Durchmesser 83 x 44 mm Dose - Äthylenvinylalkohol: 15 Gewichtsprozent

Durchmesser 73 x 57 mm Dose - Äthylenvinylalkohol: 5 Gewichtsprozent

In allen vier Fällen war der Äthylenvinylalkohol die Type EVAL F 101 A. Die Haftvermittlerschichten bestanden aus Atmer QF 500 E und die Polypropylenschichten sind SHELL HMT 6100. Die Sauerstoffdurchlässigkeitsbestimmungen wurden mit einem Oxtran 100 Zwillingsinstrument durchgeführt, das von der Firma Mocon Company, Minneapolis Mn, USA, hergestellt wird.

Die Fig. 2 zeigt eine Kurvendarstellung der Sauerstoffdurchlässigkeit eines fünflagigen, warmgeformten Kunststoffbehälters, der einer Erhitzung in einem Dampfautoklaven bei 121 Grad Celsius während 40 Minuten ausgesetzt war. Die Menge Sauerstoff, die in den Behälter eindringt, ausgedrückt in Kubikzentimeter pro Behälter pro 24 Stunden pro Atmosphäre bei 23 Grad Celsius ist über die Zeit aufgetragen. Der Plastikbehälter hat ein Verhältnis von Durchmesser zu Höhe von 83 mm zu 44 mm, eine Dicke der Seitenwände und des Bodens von ungefür 750 Micron (30 Mills) und hat einen doppelt angesiegelten Metalldeckel, um einen hermetischen Verschluß zu gewährleisten. Der Behälter oder die Dose wurde konventionell mit Hilfe eines Stempels vorgeformt. Man verwendet Plattenmaterial, welches durch Breitschlitzextrusion hergestellt wurde. Der Aufbau der Platte ist in Fig. 3 gezeigt.

In der Fig. 3 bestehen die Schichten 8 aus Polypropylen in dem assymmetrischen Verhältnis von 75 zu 25, während die Schichten 9 die Haftvermittlerschichten darstellen und die Schicht 4 die Äthylenvinylalkohol-Barriereschicht ist.

Die Ergebnisse für die Fig. 2 sind für drei verschiedene Dicken der Barriereschicht aufgetragen, nämlich 37, 75 und 110 $\mu$, und in allen drei Fällen wurde die Sauerstoffpermeationsrate (OTR) sofort und nach bestimmten Zeiträumen nach dem Autoklavenvorgang gemessen. Aus Fig. 2 ist gut erkennlich, daß die Sauerstoffpermeationsrate anfänglich wegen der in der Äthylenvinylalkoholschicht absorbierten Feuchtigkeit hoch ist. Nach einer Zeit von zwanzig bis dreißig Tagen fällt die Sauerstoffpermeationsrate auf einen immer geringeren Wert zwischen 0,0066 und 0,0034 Kubikzentimeter Sauerstoff pro Tag und Behältnis. Bei der dicksten Lage des Barrierematerials (100 $\mu$ Äthylenvinylalkohol) findet man die niedrigste Permeationsrate gegenüber Sauerstoff, denn in diesem Fall ist eine größere Menge Barrierematerial vorhanden, und auch die absorbierte Feuchtigkeit ausgedrückt in Gewichtsprozent ist die niedrigste, wenn bei einer festgelegten Menge von absorbierter Feuchtigkeit eine größere Menge Äthylenvinylalkohol vorhanden ist.

In der Fig. 2 zeigt der Graph 10 die Ergebnisse für eine Äthylenvinylalkoholschicht von 37 $\mu$ (5 Gewichtsprozent), der Graph 11 die Werte für eine Äthylenvinylalkoholschicht von 75 $\mu$ (10 Gewichtsprozent) und der Graph 12 die Werte für eine Äthylenvinylalkoholschicht von 110 $\mu$ (15 Gewichtsprozent).

Fig. 4 zeigt eine Kurve ähnlich wie in Fig. 2 für zwei übliche Sterilisationsbedingungen, nämlich 30 Minuten bei 130 Grad Celsius und 40 Minuten bei 121 Grad Celsius. Der Verbundaufbau ist ähnlich dem in Fig. 3, jedoch ist die Äthylenvinylalkoholkomponente auf 30 $\mu$ festgelegt oder entspricht 5 Gewichtsprozent der gesamten Kunststoffolie. Interessanterweise konnte in Fig. 4 festgestellt werden, daß die Barriereeigenschaften kurz nach dem Autoklavenvorgang sehr schlecht sind. Es wurde aber wiederum nach einiger Zeit (35 bis 50 Tagen) eine Verbesserung festgestellt bis zur Einstellung eines Gleichgewichtes. Es muß auch erwähnt werden, daß das Sterilisieren bei 130 Grad Celsius ein deutlicheres, sofortiges Zurückgehen der Barriereeigenschaften während der 30 Minuten Autoklavenzeit bedeutet, verglichen mit den Sterilisationsbedingungen von 40 Minuten bei 121 Grad Celsius. Es wird angenommen, daß die höhere Sterilisationstemperatur für die Permeation einer größeren Menge Feuchtigkeit durch die äußere Polypropylenschicht 8 aus Fig. 3 in die Barriereschicht 4 verantwortlich ist, wobei die Barriereeigenschaften der Barriereschicht 4 verschlechtert werden.

In der Fig. 4 zeigt der Graph 13 die Meßwerte für die Sterilisation bei 130 Grad Celsius und 30 Minuten, während der Graph 14 die Ergebnisse für die Sterilisation bei 121 Grad Celsius und 40 Minuten darstellt.

Es sollte auch erwähnt werden, daß die Meßwerte aus den Fig. 2 und 4 zur Bestimmung der Gesamtmenge Sauerstoff dienen können, die während eines Jahres in den Behälter dringt. Die Sauerstoffmenge entspricht der integrierten Fläche unter jeder Kurve. In Fig. 2 sieht man zum Beispiel, daß die gesamte Menge Sauerstoff, die während eines Jahres in den Behälter eingedrungen ist, 17,11 und 8 ppm (Teile pro Million) für die entsprechenden Schichten der Äthylenvinylalkoholbarriere von 37, 75 und 110 $\mu$ beträgt. Obwohl Grenzwerte für die gesamte Sauerstoffmenge, die während gegebener Zeit in einen Behälter eintreten darf, nicht klar definiert sind, gilt eine Faustregel der Verpackungsindustrie für Nahrungsmittel, daß für sterilisierte Fleischprodukte oder andere fetthaltige Nahrungsmittel Behältnisse erforderlich sind, die einen Sauerstoffdurchgang von weniger als 10 ppm pro Jahr Lagerzeit gewährleisten. Für andere Nahrungsmittel, einschließlich bestimmter Gemüse, die weniger sauerstoffempfindlich sind, kann das Maximum von 20 bis 40 ppm variieren.

Von weiterem Interesse ist die schon oben erwähnte europäische Patentanmeldung 0 059 274, die das Hinzufügen von bestimmten Trocknungsmitteln zu Haftvermittlerschichten auf beiden Seiten einer Äthylenvinylalkohol-Barriereschicht beschreibt. Dabei soll die Äthylenvinylalkohol-Barriereschicht vor der Aufnahme von Feuchtigkeit während des Sterilisierens bei 121 Grad Celsius geschützt werden. Die inneren und äußeren Schichten einer solchen Barrierefolie bestehen aus einer Mischung von Polypropylen und Polyäthylen, die bei Raumtemperatur eine gute Barriere gegen Feuchtigkeitsdurchtritt darstellen.

Zu berücksichtigen ist jedoch hier, daß bei Sterilisationstemperaturen eine deutliche Permeation von Wasserdampf durch Polyolyfine und Haftvermittlerschichten in die Barrierelage hinein stattfindet und damit einhergehend ein deutlicherer Anstieg der Sauerstoffpermeation in die Barrierelage. Wenn man ein Trocknungsmittel wie Calciumchlorid oder Magnesiumsulfat zu einer Haftvermittlerschicht hinzufügt, wird Wasserdampf, der während eines Sterilisationsprozesses eindringt, vorzugsweise in den Haftvermittlerschichten absorbiert, und er wird nur unbedeutend in die Barriereschicht eindringen und deren Sauerstoffpermeationseigenschaften verändern.

Weitere Einzelheiten sind mit Bezug auf die Fig. 5 bis 8 beschrieben.

So zeigt die Fig. 5 einen fünflagigen Film mit der folgenden Zusammensetzung und Dicke der einzelnen Lagen:

| Lage 15 | gegossenes Polypropylen | 60 $\mu$ |
|---------|--------------------------|----------|
| Lage 16 | Haftvermittlerschicht | 5 $\mu$ |
| Lage 17 | Äthylenvinylalkohol-Barriereschicht | 25 $\mu$ |
| Lage 18 | Haftvermittlerschicht | 5 $\mu$ |
| Lage 19 | gegossenes Polypropylen | 60 $\mu$ |

Diese Verbundfolie wird unter anderem von der Firma Hahn & Co. in Deutschland unter dem Handelsnamen "ESCOFLEX" gehandelt. Das rollenfärmige Material wird als Unterbahn in einer Formfüllsiegelmaschine, wie z.B. DIXIVAC 2000, zur Herstellung der Seitenwände und des Bodens einer Packung von ungefähr 100 mm Länge, 85 mm Breite und 25 mm Tiefe verwendet, in welcher ungefähr 125 g Gemüse zum späteren Sterilisieren Platz finden.

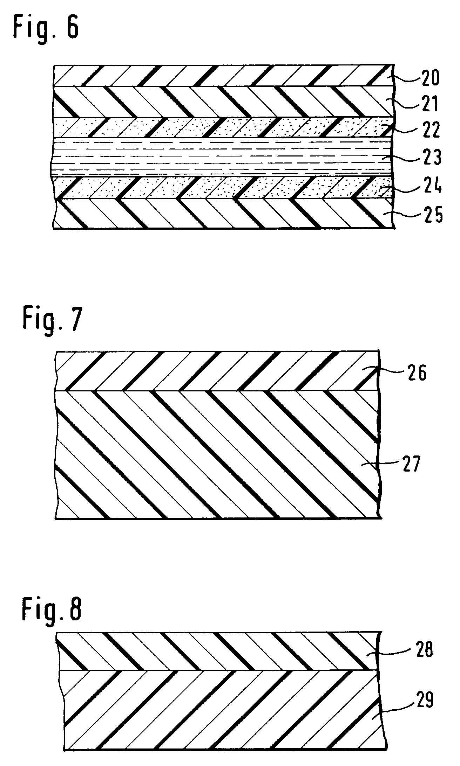

Fig. 6 bezieht sich auf eine Oberbahn eines sechlagigen Laminats, welches dann nach vorausgehendem Evakuieren auf das Laminat der Abbildung 5 gesiegelt wird, um schließlich eine dicht versiegelte Verpackung eines Gemüseproduktes zu bilden. Die Zusammensetzung des mehrlagigen Laminats der Fig. 6 ist die folgende:

| Lage 20 | orientierte Polyesterfolie | 12 $\mu$ |
|---------|----------------------------|----------|
| Lage 21 | gegossenes Polypropylen | 5 $\mu$ |
| Lage 22 | Haftvermittlerschicht | 5 $\mu$ |
| Lage 23 | Äthylenvinylalkohol-Barriereschicht | 25 $\mu$ |
| Lage 24 | Haftvermittlerschicht | 5 $\mu$ |
| Lage 25 | gegossenes Polypropylen | 50 $\mu$ |

Die Lage 16 kann von verschiedenen Herstellern bezogen werden und wird üblicherweise als Polyesterfolie bezeichnet, wie z.B. "MELLINEX 800" von der Firma ICI. Die Folie wird mit Hilfe von Polyuretahn-Kaschierklebern auf den kommerziell erhältlichen fünflagigen Verbund, der in Fig. 5 beschrieben ist, kaschiert und dient als die oberste Schicht in Kontakt mit den Heißsiegelbacken einer Formfüllsiegelmaschine. Der verwendete Kleber ist "LIOFOL UK 3640 und 6800", geliefert von der Firma Henkel & Co., Düsseldorf.

Fig. 7 zeigt die seitlichen Wände und den Boden einer Außenverpackung. Dabei sind die Schichtfolgen und -dicken wie folgt:

| Lage 26 | niederdichtes Polyäthylen | 50 $\mu$ |
| Lage 27 | Hart-PVC | 400 $\mu$ |

Im Handel erhältliche Rollen aus Polyäthylen- und Hart-PVC-Folie werden unter Anwendung von Polyurethan-Kaschierklebern zusammengefügt. Man erhält eine Struktur wie in Fig. 7.

Fig. 8 bezieht sich auf eine Oberbahn einer äußeren Hülle 1 und besteht aus:

| Lage 28 | orientierte Polyamidfolie | 15 $\mu$ |
| Lage 29 | niedrigdichte Polyäthylenfolie | 50 $\mu$ |

Eine Folie aus Polyamid 6 wird biaxial orientiert und ist erhältlich im Handel unter anderem von der Firma BASF unter der Bezeichnung "ULTRAMID B 4". Sie wird mit der niedrigdichten Polyäthylenfolie unter Verwendung von Polyurethan-Kaschierklebern verbunden.

Die beiden mehrlagigen Verbundfolien aus den Fig. 7 und 8 werden für die äußere Hülle 1 verwendet, die die Maße von 134 mm Länge, 102 mm Breite und 35 mm Ziehtiefe aufweist. Beide Innenbeutel mit den Nahrungsmitteln werden dann kurz nach dem Sterilisieren in einen äußeren Behälter eingesetzt, vorzugsweise innerhalb von zwei Stunden nach dem Autoklavenvorgang. Die Außenverpackung und ihr Inhalt werden dann einem Vakuum ausgesetzt, um die umgebene Luft zu ersetzen. Darauf wird die fehlende Atmosphäre durch reines Stickstoffgas oder ein anderes Schutzgas vor dem Versiegeln der Oberbahn (Fig. 8) gegen den oberen Teil der Bodenfolie (Fig. 7) ersetzt, und man erhält letztlich eine standfeste Verpackung, die zwei Innenbeutel 2 eines sterilisierten, autoklavierten Nahrungsmittels 3 enthält.

Beispiel:

Innerhalb einer Testserie wurden frische Erbsen, Stangenbohnen und Karotten unter üblichen Zeit- und Temperaturbedingungen in Wasser blanchiert. Im Fall der Karotten wurde dem Blanchieren ein Dampfschälen bei 250 Grad Celsius während 10 Sekunden vorgezogen. Die blanchierten Gemüse wurden dann unter Vakuum ohne Zusatz von Lake oder Wasser versiegelt, indem man mehrlagige Verbundfolien benutzte, wie sie in Fig. 5 und 6 gezeigt werden. Eine DV-2000-Maschine, die von Dixie-Union Verpackungen GmbH, Kempten, hergestellt wird, wurde zur Ausführung dieser Vorgänge des Formens, Füllens und Siegelns eingesetzt.

Die versiegelten Beutel wurden dann in einen Autoklaven mit Fachböden eingestellt, wobei Dampf oder Wasser als Wärmeträgermedium Verwendung findet. Es wurde bei 125 Grad Celsius sterilisiert über eine Zeit, die ausreichend ist, um einen FO-Wert von 9 sicherzustellen. Die sterilisierten Gemüsebeutel wurden dann auf Raumtemperatur heruntergekühlt und innerhalb von zwei Stunden in einer äußeren Verpackung eingesiegelt, die einen Aufbau, wie in Fig. 7 und 8 gezeigt, aufwies. Eine DV-2000-Maschine wurde auch hier eingesetzt, um die beiden inneren Beutel mit dem Gemüseprodukt in der äußeren Verpackung unter Stickstoffschutzgasatmosphäre zu verpacken. Jeder Innenbeutel 2 enthielt ungefähr 125 g Gemüse, zusammen also 250 g Gemüse in einer äußeren Hülle 1.

Die kompletten Gemüsepackungen wurden dann im Dunkeln bei einer konstanten Temperatur von 23 Grad Celsius gelagert und periodisch auf organoleptische Veränderungen gegenüber der Lagerzeit überprüft. Zu Vergleichszwecken wurden innere Beutel mit sterilisierten Nahrungsmitteln ohne die Außenverpak-kung bei 23 Grad Celsius gelagert und von Zeit zu Zeit auf organoleptische Veränderungen hin überprüft.

Veränderungen der Farbe, der Textur und des Gechmacks der einzelnen Gemüse über die Lagerzeit sind in Tabelle 1 aufgeführt.

EP 0 511 413 A1

## Tabelle 1

| | | Karotten | | | | | Erbsen | | | | | grüne Bohnen | | | | |
|---|---|---|---|---|---|---|---|---|---|---|---|---|---|---|---|---|
| Lagerzeit in Monaten | | 0 | 1 | 3 | 6 | 12 | 0 | 1 | 3 | 6 | 12 | 0 | 1 | 3 | 6 | 12 |
| Farbe | mit äußerer Verpackung | 10 | 8 | 7 | 7 | 6 | 10 | 9 | 8 | 8 | 7 | 10 | 9 | 8 | 8 | 7 |
| | ohne äußere Verpackung | 10 | 6 | 5 | 5 | 4 | 10 | 6 | 5 | 5 | 4 | 10 | 7 | 6 | 6 | 5 |
| Textur | mit äußerer Verpackung | 10 | 9 | 9 | 8 | 8 | 10 | 8 | 8 | 7 | 7 | 10 | 9 | 9 | 8 | 8 |
| | ohne äußere Verpackung | 10 | 8 | 7 | 7 | 6 | 10 | 7 | 6 | 6 | 5 | 10 | 8 | 7 | 6 | 6 |
| Ge- schmack | mit äußerer Verpackung | 10 | 8 | 7 | 7 | 7 | 10 | 8 | 7 | 7 | 7 | 10 | 8 | 7 | 7 | 6 |
| | ohne äußere Verpackung | 10 | 7 | 6 | 6 | 5 | 10 | 7 | 6 | 6 | 5 | 10 | 6 | 5 | 4 | 4 |

Benotung: 10 = beste Eigenschaften, vergleichbar mit frischem Produkt

Aus der Tabelle 1 geht klar hervor, daß die Innenverpackungen mit Gemüsen, die in einem äußeren Behälter unter Stickstoffatmosphäre gelagert wurden, signifikant weniger Verschlechterung von Geschmack, Textur und Farbe erlitten im Vergleich zu ähnlichen Innenbeuteln mit Gemüse, die einfach in der Umgebungsluft gelagert wurden. Die deutlichste Verschlechterung der organoleptischen Eigenschaften des Füllgutes der Innenbeutel, die ohne den Schutz einer äußeren Verpackung gelagert wurden, scheinen in der Zeitspanne zwischen null und drei Monaten aufzutreten. Diese Zeitspanne stimmt überein mit der Zeitspanne, die in der Fig. 2 gezeigt wird und die die Wiederherstellung der Sauerstoffbarriereeigenschaften von Polyolyfinverbunden mit Äthylvinylalkohol-Barriereschichten zeigt, wenn solche Verbunde einem Autoklavenprozeß bei 121 Grad Celsius über 40 Minuten ausgesetzt werden.

Um eine noch fundiertere Aussage über die Schutzfunktion der äußeren Verpackung gegenüber der Innenpackung in dem Zeitraum zu bekommen, der notwendig ist, damit der Äthylvinylalkohol seine Sauerstoffbarriereeigenschaften nach dem Autoklavenprozeß wieder erlangt, wurden die Meßwerte, die in der Tabelle 2 stehen, bestimmt.

Tabelle 2

| Zeit | 3 | 6 | 12 Monate |
|---|---|---|---|
| Sauerstoffkonzentration innerhalb des Innenbeutels, wenn dieser in der Stickstoffatmosphäre einer äußeren Verpackung gelagert wurde | 6 | 17 | 44 ppm |
| Konzentration im Innenbeutel ohne äußere Verpackung | 71 | 87 | 118 ppm |

In dieser Studie wurden detaillierte Sauerstoff-Permeationsmessungen durchgeführt bezüglich der Menge Sauerstoff, die

a) in eine Innenverpackung nach dem Autoklavenprozeß eindringt, und

6

b) in Innenverpackungen eindringt, welche kurz nach dem Autoklavenprozeß in eine äußere Verpackung unter Stickstoffschutzgasatmosphäre eingesetzt wurden.

Die Zeit und die Temperatur während des Sterilisierens betrug jeweils 15 Minuten und 125 Grad Celsius. Anstelle von Nahrungsmitteln im inneren Beutel wurde Wasser als Füllgutkomponente verwendet. Die Zeit, die zwischen der Vervollständigung des Sterilisierens und dem Einsetzen der inneren Beutel in die äußere Verpackung mit der Stickstoffschutzgasatmosphäre verstrichen war, betrug ungefähr zwei Stunden. Die mehrlagigen Verbunde, die verwendet wurden, waren diejenigen, die in Fig. 5, 6, 7 und 8 beschrieben sind. Aus den Ergebnissen in Tabelle 2 ist ersichtlich, daß es die Funktion der äußeren Verpackung ist, das Eintreten von Sauerstoff in die innere Verpackung, also in das Füllgut, während der ersten drei Monate bei einer Lagerung bei 20 Grad Celsius signifikant zu reduzieren. Es sind dies diese ersten drei Monate, während der eine Äthylvinylalkoholschicht ihre Barriereeigenschaften gegenüber Sauerstoffdurchtritt wieder herstellt, wenn die Sperrschicht während des Autoklavenprozesses feucht geworden ist.

**Patentansprüche**

1. Verfahren zur Herstellung eines Doppelbehältnisses für die Verpackung von sterilisierten Nahrungsmitteln, mit einem Außen- und einem Innenbehältnis aus Kunststoff-Verbunden, dadurch gekennzeichnet, daß nach dem Sterilisierungsvorgang, dem nur der Innenbeutel (2) mit Inhalt unterworfen wird, in die äußere Hülle (1) Schutzgas eingeleitet wird und diese Hülle (1) dann versiegelt wird.

2. Verfahren nach Anspruch 1, dadurch gekennzeichnet, daß als Schutzgas Stickstoff verwendet wird.

3. Doppelbehältnis, hergestellt nach dem Verfahren nach einem oder beiden der vorhergehenden Ansprüche, dadurch gekennzeichnet, daß der Innenbeutel (2) das Nahrungsmittel (3), beispielsweise Gemüse, enthält, der Innenbeutel dicht geschlossen ist und in der Schutzgasfüllung der äußeren dicht geschlossenen Hülle (1) angeordnet ist.

4. Doppelbehältnis nach einem oder mehreren der vorhergehenden Ansprüche, dadurch gekennzeichnet, daß der Innenbeutel (2) eine feuchtigkeitsempfindliche Barriereschicht (4) aufweist.

5. Doppelbehältnis nach einem oder mehreren der vorhergehenden Ansprüche, dadurch gekennzeichnet, daß die Barriereschicht (4) aus Äthylenvinylalkohol besteht.

6. Doppelbehältnis nach einem oder mehreren der vorhergehenden Ansprüche, dadurch gekennzeichnet, daß die Barriereschicht (4) aus Polyvinylalkohol besteht.

7. Doppelbehältnis nach einem oder mehreren der vorhergehenden Ansprüche, dadurch gekennzeichnet, daß die äußere Hülle (1) aus Bodenteil (5) und Seitenteilen (6) besteht.

8. Doppelbehältnis nach einem oder mehreren der vorhergehenden Ansprüche, dadurch gekennzeichnet, daß Boden- und Seitenteile (5,6) aus einem Verbund von Polyäthylen und Hart-PVC oder amorpher Polyesterfolie hergestellt sind.

9. Doppelbehältnis nach einem oder mehreren der vorhergehenden Ansprüche, dadurch gekennzeichnet, daß die äußere Hülle (1) von einer Deckelfolie (7) verschlossen ist.

10. Doppelbehältnis nach einem oder mehreren der vorhergehenden Ansprüche, dadurch gekennzeichnet, daß die äußere Hülle (1) standfest ausgebildet ist.

## Fig. 1

eindringende
Menge
$O_2$ $\left[\dfrac{cm^3}{Beh\ddot{a}lter.atm}\right]$

## Fig. 2

Fig. 3

Fig. 4

eindringende
Menge $O_2$

$\left[\dfrac{cm^3}{Beh\ddot{a}ltnis.atm}\right]$

0.10

0.05

0.02

0.01

13

14

Zeit
[Tage]

10   20   30   40   50   60   70   80   90

Fig. 5

Fig. 6

```
                                    20
                                    21
                                    22
                                    23
                                    24
                                    25
```

Fig. 7

```
                                    26

                                    27
```

Fig. 8

```
                                    28

                                    29
```

| | Europäisches Patentamt | EUROPÄISCHER RECHERCHENBERICHT | Nummer der Anmeldung |
|---|---|---|---|
| | | | EP 91 10 6900 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | FR-A-2 624 350 (NORMANDIE ALIMENTAIRE) <br> * Seite 2, Zeile 6; Ansprüche 1-5 * | 1-3 | B65D81/20 |
| Y | | 4-10 | |
| | --- | | |
| X | EP-A-0 337 844 (CARNAUD) <br> * Ansprüche 1-7; Abbildungen 1-4 * | 1,3 | |
| | --- | | |
| Y,D | EP-A-0 059 274 (AMERICAN CAN) <br> * Ansprüche 1-3 * | 4-6 | |
| | --- | | |
| Y | FR-A-2 648 792 (LAUTARD) | 7-10 | |
| Y | * Ansprüche 1-3; Abbildungen 1,2 * | 7-10 | |
| | ----- | | |
| | | | RECHERCHIERTE SACHGEBIETE (Int. Cl.5 ) |
| | | | B65D |

Der vorliegende Recherchenbericht wurde für alle Patentansprüche erstellt

| Recherchenort | Abschlußdatum der Recherche | Prüfer |
|---|---|---|
| DEN HAAG | 17 JANUAR 1992 | ANDEREGG P-Y.F. |

EPO FORM 1503 03.82 (P0403)